(19) **Europäisches Patentamt / European Patent Office / Office européen des brevets**

(11) **EP 2 168 871 B1**

(12) **FASCICULE DE BREVET EUROPEEN**

(45) Date de publication et mention de la délivrance du brevet:
**09.03.2011 Bulletin 2011/10**

(51) Int Cl.:
**B64D 1/22** *(2006.01)* **B64D 1/12** *(2006.01)*
**B64C 27/00** *(2006.01)*

(21) Numéro de dépôt: **09011752.4**

(22) Date de dépôt: **15.09.2009**

(54) **Procédé de largage d'une charge externe portée par un aéronef et dispositif associé**

Method for jettisoning an external load carried by an aircraft and its associated device

Verfahren zum Abwurf einer an einem Luftfahrzeug getragenen externen Last, sowie die dazu benötigte Vorrichtung

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.09.2008 FR 0805298**

(43) Date de publication de la demande:
**31.03.2010 Bulletin 2010/13**

(73) Titulaire: **EUROCOPTER**
**13725 Marignane (FR)**

(72) Inventeur: **Certain, Bernard**
**13090 Aix en Provence (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**EP-A- 0 259 250 FR-A- 2 502 772**
**GB-A- 2 437 407 US-A1- 2007 200 032**

**Description**

La présente invention concerne un procédé de largage d'une charge externe portée par un aéronef, tel qu'un hélicoptère, et le dispositif associé.

Le domaine technique de l'invention est donc celui des dispositif et procédé de largage d'une charge externe d'aéronef.

En effet, un aéronef, et plus particulièrement un giravion de type hélicoptère, peut être équipé de manière optionnelle d'une installation pour transporter des charges externes.

Ainsi, le giravion comporte généralement un crochet-délesteur tournant fixé à une structure porteuse de ce giravion. Une élingue est alors accrochée à ce crochet-délesteur afin de permettre l'emport de charges externes lourdes.

En outre, le crochet-délesteur autorise le largage de la charge externe en vol, afin de libérer cette charge externe en un lieu déterminé ou lorsqu'une situation de détresse se présente.

Les documents suivants présentent l'arrière plan technologique des installations de transport de charge.

Plus précisément, le document GB2437407 divulgue l'existence d'un système muni d'un crochet pour suspendre une charge et d'un moyen de détachement de cette charge.

Le document EP 0259250 montre un hélicoptère auquel est suspendue une benne pourvue de stabilisateurs.

Le document FR2149777 présente un système de stabilisation d'une charge externe sous un aéronef prévoyant d'agir sur les commandes de vol afin que l'aéronef réalise des mouvements correcteurs.

Le document FR2575550 présente un système qui fournit en temps réel le poids supporté par les crochets-délesteurs auxquels est arrimée une charge externe.

Le document JP19960101019 décrit un treuil apte à limiter les accélérations subies par un corps, suspendu à ce treuil via une élingue.

Le document GB1074465 présente un dispositif pour limiter l'angle de balancement d'une élingue fixée à un treuil par rapport à l'axe de la pesanteur.

Il en va de même pour le document US3904156 qui prévoit l'action de vérins sur une élingue rigide.

Enfin, le document FR2197766 prévoit un moyen explosif pour décrocher le crochet supportant la charge et sectionner l'élingue.

Il ressort de l'art antérieur que la mise en oeuvre d'une élingue accrochée à la structure d'un giravion n'est pas sans danger.

En premier lieu, on observe des largages intempestifs de la charge supportée pouvant entrainer des conséquences fâcheuses d'une part pour tous les éléments se trouvant sur la trajectoire de ladite charge externe, et, d'autre part pour le giravion dans la mesure où le largage entraine éventuellement et malencontreusement une remontée brutale de l'élingue vers le giravion.

En effet, un crochet-délesteur peut généralement être commandé soit électriquement, soit mécaniquement via une chaine de transmission mécanique. Un défaut de cette chaine de transmission mécanique entraine alors parfois un largage intempestif.

En deuxième lieu, lorsqu'effectivement la charge externe ou l'élingue s'accroche à un obstacle au sol, le giravion se trouve bloqué. Du fait de l'inertie du giravion, des efforts importants sont exercés sur l'élingue. Ces efforts entrainent une rupture de l'élingue ce qui libère le giravion.

Cependant, compte tenu de la brutalité de la manoeuvre, l'incidence du disque formé par les pales du rotor oscille vers l'arrière durant une phase transitoire. Les pales risquent alors de heurter, voire de couper la poutre de queue du giravion.

Enfin, en troisième lieu, à la suite d'un décrochage intempestif ou d'une rupture de l'élingue, la portion d'élingue restant fixée au giravion tend à remonter brutalement et risque de s'emmêler dans un rotor du giravion.

La présente invention a alors pour objet de proposer un procédé permettant d'automatiser le largage d'une charge externe en cas d'incident.

Selon l'invention, un procédé de largage automatique d'une charge externe suspendue de manière réversible à un crochet-délesteur d'une cellule d'aéronef par une élingue, est notamment remarquable en ce qu'au cours de ce procédé :

- on mesure un angle séparant l'élingue d'un axe vertical en élévation de l'aéronef, cet axe vertical en élévation étant parallèle à l'axe de lacet de l'aéronef et passant par le point d'accrochage d'un moyen de soutènement du crochet-délesteur à la cellule de l'aéronef,
- on active le largage automatique lorsque d'une part cet angle dépasse une borne supérieure et, d'autre part quand l'élingue est dirigée vers l'arrière de l'aéronef afin d'éventuellement procéder au largage de la charge externe.

Il est à noter qu'outre l'axe de lacet, l'aéronef comporte par ailleurs un axe longitudinal dénommé « axe de roulis » et un axe transversal dénommé « axe de tangage ».

Par conséquent, une charge externe est fixée à une élingue accrochée de manière réversible à un crochet-délesteur.

L'invention propose alors un procédé permettant d'automatiser le largage de la charge externe d'un aéronef, en fonction de la position de l'élingue.

Ainsi, quand l'extrémité libre de l'élingue, à savoir l'extrémité de l'élingue à laquelle est fixée la charge externe, est dirigée vers l'arrière de l'aéronef, sa poutre de queue par exemple, on mesure l'angle séparant l'élingue dudit axe vertical en élévation de l'aéronef.

Si cet angle est important, on estime qu'il y a un risque pour l'aéronef, et on active le largage automatique. Le crochet-délesteur est alors susceptible de relâcher l'élingue, et par suite la charge externe.

Avantageusement, la borne supérieure à partir de laquelle on active le largage automatique est égale à 60 degrés.

Le procédé comporte éventuellement une ou plusieurs des caractéristiques qui suivent.

Ainsi, quand l'angle séparant l'élingue dudit axe vertical en élévation de l'aéronef est compris entre une borne inférieure et la borne supérieure, on déclenche une première alarme, visuelle ou sonore, pour prévenir le pilote de l'aéronef que l'élingue se rapproche d'une position potentiellement dangereuse.

La borne inférieure peut être de l'ordre, ou égale, à 45 degrés.

Par ailleurs, on détermine avantageusement la première valeur d'un quotient de la tension exercée sur l'élingue par un terme évaluatif dépendant du facteur de charge de ladite cellule suivant l'axe de la pesanteur et, la deuxième valeur de la dérivée par rapport au temps dudit quotient.

Les première et deuxième valeurs vont alors permettre de déterminer si la charge externe est accrochée à un élément extérieur.

On note que ledit terme évaluatif est égal au facteur de charge de la cellule de l'aéronef, ou encore au produit de ce facteur de charge par l'accélération de la pesanteur (g).

Dans ces conditions, on déclenche une deuxième alarme quand d'une part le largage automatique n'est pas activé du fait dudit angle, et d'autre part, quand les première et deuxième valeurs atteignent un niveau prédéterminé.

Par contre, on déclenche le largage automatique en ordonnant au crochet-délesteur de relâcher l'élingue quand d'une part le largage automatique est activé du fait dudit angle, et d'autre part, quand les première et deuxième valeurs atteignent un niveau prédéterminé.

En effet, si l'angle séparant l'élingue dudit axe vertical en élévation de l'aéronef dépasse la borne supérieure, on se trouve dans une situation potentiellement dangereuse, et on active le largage. De plus, si le quotient décrit précédemment et la dérivée de ce quotient dépassent un niveau prédéterminé alors, on en déduit que la charge externe est accrochée.

On ouvre alors automatiquement le crochet-délesteur pour larguer l'ensemble élingue/ charge externe.

Plus précisément, on déclenche le largage automatique en ordonnant au crochet-délesteur de relâcher ladite élingue quand d'une part le largage automatique est activé du fait dudit angle, et d'autre part, quand ladite première valeur dépasse une limite supérieure et indépendamment de la deuxième valeur.

La première valeur est alors si élevée que, quelle que soit la deuxième valeur, on en déduit que la charge externe est accrochée à un élément extérieur.

De même, on déclenche le largage automatique en ordonnant au crochet-délesteur de relâcher l'élingue quand d'une part le largage automatique est activé du fait dudit angle, et d'autre part, quand la première valeur est comprise entre une limite inférieure et une limite supérieure, une limite inférieure et une limite supérieure de signe positif, alors que la deuxième valeur dépasse un seuil.

Outre le procédé, l'invention a pour objet un aéronef muni d'un dispositif d'accrochage d'une charge externe à une cellule de l'aéronef, le dispositif d'accrochage étant pourvu d'un crochet-délesteur ainsi que d'un moyen de soutènement et d'une élingue, ce crochet-délesteur étant fixé à un point d'accrochage de la cellule par le moyen de soutènement, l'élingue étant solidarisée de manière réversible au crochet-délesteur.

Cet aéronef est remarquable en ce qu'il comporte un moyen de mesure, pour déterminer un angle séparant l'élingue d'un axe vertical en élévation de l'aéronef parallèle à l'axe de lacet de l'aéronef et passant par un point d'accrochage du moyen de soutènement à la cellule de l'aéronef, ainsi qu'une unité de traitement reliée au crochet-délesteur et audit moyen de mesure, l'unité de traitement étant apte à recevoir un premier signal de la part du moyen de mesure relatif audit angle et à la position de l'élingue afin de mettre en oeuvre le procédé de largage automatique revendiqué explicité précédemment.

Par exemple, le moyen de mesure est pourvu d'un arceau agencé sur le moyen de soutènement, tel qu'une barre, et d'un capteur apte à être agencé sur la cellule.

Le capteur peut être un capteur optique déterminant ledit angle et de fait si l'élingue est dirigée vers l'arrière de l'aéronef, ou encore être pourvu d'une palette mobile et d'un capteur angulaire pour déterminer la position angulaire de la palette.

Lorsque l'élingue s'incline vers l'arrière de l'aéronef, l'arceau pousse sur la palette qui effectue un mouvement rotatif. Ce mouvement rotatif est détecté par le capteur angulaire qui communique avec l'unité de traitement. L'unité de traitement en déduit dès lors que l'élingue s'incline vers l'arrière de l'aéronef de l'angle mesuré par le capteur angulaire.

En fonction des informations reçues, l'unité de traitement en déduit l'angle de l'élingue par rapport à l'axe vertical en élévation de l'aéronef et son orientation.

Par ailleurs, pour pouvoir prendre la décision du largage automatique, le dispositif d'accrochage comporte éventuellement un peson agencé sur le moyen de soutènement, ce peson étant relié à l'unité de traitement pour lui envoyer un deuxième signal relatif à la tension de l'élingue.

De plus, le dispositif d'accrochage comporte un accéléromètre relié à l'unité de traitement pour lui envoyer un troisième signal relatif aux accélérations subies par la cellule.

Ainsi, l'unité de traitement peut déterminer la première valeur d'un quotient de la tension exercée sur l'élingue par un terme évaluatif dépendant du facteur de charge de la cellule suivant l'axe de la pesanteur et, la deuxième valeur de la dérivée par rapport au temps dudit quotient. La tension et le facteur de charge suivant l'axe de la pesanteur sont déterminés par l'unité de traitement à l'aide respectivement du peson et dudit accéléromètre.

En outre, le dispositif d'accrochage comporte éventuellement une unité de visualisation commandée par l'unité de traitement pour afficher des alarmes et/ou des informations relatives à l'opération d'accrochage.

Enfin, pour augmenter la sécurité, le dispositif d'accrochage comporte un moyen de commande manuel, de type électrique ou mécanique, du crochet-délesteur.

La présente invention a aussi pour objet le procédé de fabrication du dispositif précité.

L'invention et ses avantages apparaîtront avec plus de détails dans le cadre de la description qui suit avec des exemples de réalisation donnés à titre illustratif en référence aux figures annexées qui représentent :

- la figure 1, une vue schématique d'un dispositif selon l'invention,

- la figure 2, un schéma illustrant le procédé selon l'invention, et

- la figure 3, un diagramme présentant les limites inférieure et supérieur du quotient déterminé lors du procédé.

Les éléments présents dans plusieurs figures distinctes sont affectés d'une seule et même référence.

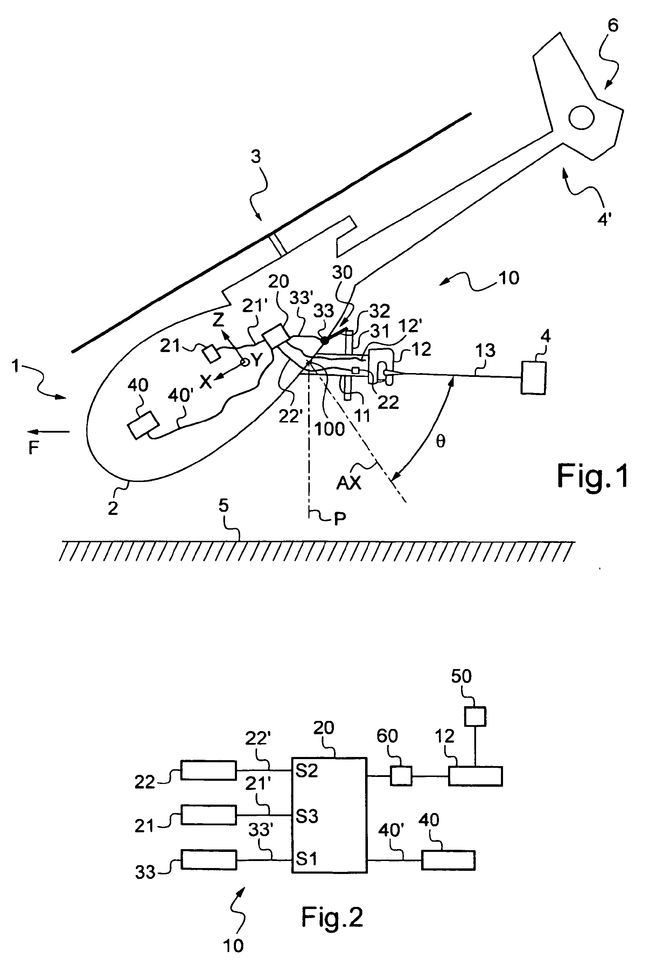

La figure 1 présente une vue schématique d'un aéronef volant au dessus du sol 5 selon la flèche $\underline{F}$. Cet aéronef est un hélicoptère 1 muni d'une cellule 2 ainsi que d'un rotor principal 3 de sustentation et de propulsion et d'un rotor arrière 6 agencé à l'arrière de l'hélicoptère 1.

On note que les axes $\underline{X}$, $\underline{Y}$, $\underline{Z}$ représentent respectivement l'axe de roulis, l'axe de tangage et l'axe de lacet de l'hélicoptère.

De plus, l'hélicoptère 1 est pourvu d'un dispositif d'accrochage 10 afin de pouvoir soutenir une charge externe 4.

Ainsi, le dispositif d'accrochage 10 comporte un crochet-délesteur 12 fixé à un point d'accrochage 100 de la cellule 2 de l'hélicoptère 1 par un moyen de soutènement 11, une barre par exemple. On se rapportera à la littérature en ce qui concerne le fonctionnement classique d'un crochet-délesteur ainsi que les moyens de fixation, un cadre dénommé « swing » par exemple, du moyen de soutènement à la cellule 2.

La charge externe 4 est alors accrochée à la mâchoire du crochet-délesteur via une élingue 13.

Afin de pouvoir libérer l'ensemble élingue 13/ charge externe 4, le dispositif d'accrochage 10 est muni de moyens d'ouverture manuel et automatique du crochet-délesteur 12.

Ainsi, le dispositif d'accrochage comporte une unité de traitement 20 apte à commander automatiquement l'ouverture du crochet-délesteur en lui envoyant des instructions, sous la forme d'un courant électrique par exemple, via un câblage 12'.

Dans ces conditions, pour déterminer si la charge externe 4 doit être larguée, l'unité de traitement est relié à un moyen de mesure 30 apte à déterminer l'orientation de l'élingue 13 et un angle θ séparant l'élingue 13 de l'axe vertical en élévation AX de l'aéronef parallèle à l'axe de lacet $\underline{Z}$ de l'aéronef et passant par le point d'accrochage 100 du moyen de soutènement 11 du crochet-délesteur 12 à la cellule 2 de l'aéronef 1.

Ce moyen de mesure 30 est équipé d'un arceau 31, un disque souple par exemple, agencé sur le moyen de soutènement. En outre, ce moyen de mesure 30 comporte un capteur de contact qui coopère avec l'arceau 31.

Plus précisément, le capteur de contact est muni d'une palette 32 articulée sur la cellule 2 de l'hélicoptère de façon à être mobile en rotation, et d'un capteur angulaire 33 déterminant l'angulation de la palette.

La palette 32 est agencée entre le point d'accrochage 100 et l'extrémité arrière de l'aéronef.

Par conséquent, lorsque l'élingue 13 se déplace vers l'arrière 4' de l'hélicoptère, l'arceau 31 entre en contact avec la palette et entraîne ainsi sa rotation.

Par suite, le premier signal envoyé par le capteur angulaire 33 du moyen de mesure 30 à l'unité de traitement 20, par un câble 33', permet à l'unité de traitement de déterminer la position de la palette à savoir son orientation vers l'arrière de l'aéronef et l'angle θ.

Par exemple, le capteur angulaire envoie un signal électrique dont la tension est proportionnelle à l'angulation de la palette et à l'angle θ Le capteur angulaire est de type usuel.

Par ailleurs, le dispositif d'accrochage 10 possède un premier moyen complémentaire pour déterminer la tension $\underline{T}$ exercée par la charge externe 4 sur l'élingue 13.

Classiquement, ce premier moyen complémentaire est dans la variante représentée un peson 22, mettant par exemple en oeuvre une jauge de contraintes, agencé sur le moyen de soutènement 11.

A l'instar du moyen de mesure, le peson est relié à l'unité de traitement de manière à lui envoyer un deuxième signal, ladite unité de traitement pouvant déterminer la tension $\underline{T}$ de l'élingue à l'aide de ce deuxième signal selon des techniques connues par l'homme du métier.

De plus, le dispositif d'accrochage 10 comporte un accéléromètre 21 connecté à l'unité de traitement 20 par un câble 21'.

L'unité de traitement reçoit alors un troisième signal de l'accéléromètre afin de déterminer le facteur de charge $\underline{n}$ de la cellule 2 suivant l'axe de la pesanteur $\underline{P}$.

En outre, le dispositif d'accrochage est muni d'une unité de visualisation 40, agencée dans le cockpit de l'hélicoptère 1 et connectée à l'unité de traitement 20 par un câblage 40', apte à afficher des alarmes ou encore des informations relatives à l'opération d'accrochage, telles que le nombre de décrochages de l'élingue ou la charge totale transportée au cours d'une journée par exemple.

Enfin, le dispositif d'accrochage est muni d'un moyen de commande manuel, un bouton de commande éventuellement, qui agit directement sur le crochet-délesteur 12.

A l'aide de ce moyen de commande, un opérateur peut ouvrir le crochet-délesteur 12.

La figure 2 illustre le fonctionnement du dispositif d'accrochage 12.

Le capteur angulaire 33 du moyen de mesure 30, le peson 22 et l'accéléromètre 21 envoient respectivement un premier, un deuxième et un troisième signaux S1, S2, S3 à une unité de traitement 20 du dispositif d'accrochage 10.

Dans un premier temps, l'unité de traitement compare l'angle θ, déterminé à l'aide du premier signal S1, à une borne inférieure BINF de l'ordre de 45 degrés et une borne supérieure BSUP de 60 degrés.

Lorsque ledit angle est inférieur à la borne inférieure, l'unité de traitement désactive le largage automatique.

Quand cet angle est compris entre la borne inférieure et la borne supérieure, l'unité de traitement 20 déclenche une première alarme, telle qu'une alarme visuelle qui apparaît sur l'unité de visualisation 40.

A ce stade, les risques ne sont pas encore importants. Toutefois, il est avantageux de prévenir le pilote de l'aéronef pour lui indiquer si l'élingue se rapproche d'une position potentiellement dangereuse.

Par contre, si l'angle de l'élingue atteint la borne supérieure, et si l'élingue est dirigée vers l'arrière de l'aéronef, l'unité de traitement active le largage automatique.

Une première condition nécessaire au largage est alors remplie, ce qui explique l'activation du largage.

En effet, durant un vol d'avancement normal, l'élingue ne doit normalement pas être séparée d'un axe vertical en élévation AX de l'aéronef 1 par un angle supérieur à la borne supérieure. Par suite, la première condition sera remplie en cas de manoeuvre brutale de l'aéronef, ou en cas de blocage de l'élingue.

Dans le doute, le largage automatique est activé.

Pour prendre la décision de larguer l'ensemble élingue/ charge externe, l'unité de traitement va vérifier si une deuxième condition est remplie.

Par suite, à l'aide du deuxième signal S2 provenant du peson 22, l'unité de traitement va déterminer, de manière usuelle, la tension $\underline{T}$ exercée sur l'élingue 13.

De plus, à l'aide du troisième signal S3 provenant de l'accéléromètre 21, l'unité de traitement 20 détermine, de manière usuelle, le facteur de charge $\underline{n}$ de la cellule 2 selon l'axe de la pesanteur $\underline{P}$.

L'unité de traitement en déduit un terme évaluatif $\underline{N}$ dépendant de ce facteur de charge.

Selon une première variante, ledit terme évaluatif $\underline{N}$ est égal au facteur de charge $\underline{n}$, alors que selon une deuxième variante le terme évaluatif $\underline{N}$ est égal au produit du facteur de charge $\underline{n}$ par l'accélération de la pesanteur $\underline{g}$ soit

$$N = n*g$$

Ou « * » représente le signe de la multiplication et,

« g » représente l'accélération de la pesanteur valant 9.81 m/s$^2$.

A l'aide de la tension $\underline{T}$ et du terme évaluatif $\underline{N}$ déterminé par l'unité de traitement 20, cette unité de traitement 20 calcule en temps réel la première valeur V1 d'un quotient $\underline{Q}$ de la tension $\underline{T}$ exercée sur l'élingue 13 par le terme évaluatif $\underline{N}$ dépendant du facteur de charge $\underline{n}$ de ladite cellule 2, à l'aide de la première relation suivante :

$$Q = \frac{T}{N}$$

De même, l'unité de traitement 20 calcule en temps réel la deuxième valeur V2 de la dérivée $\dfrac{dQ}{dt}$ du quotient $\underline{Q}$ par rapport au temps.

De la sorte, la deuxième condition de largage sera remplie quand les première et deuxième valeurs V1, V2 atteignent un niveau prédéterminé.

Il est à noter que la surveillance de la dérivée $\dfrac{dQ}{dt}$ permet de déterminer si l'augmentation de la valeur du quotient $\underline{Q}$ est due à l'accrochage de la charge externe à un obstacle ou à des turbulences voire à un virage de l'aéronef par exemple.

Par suite, l'unité de traitement 20 déclenche le largage automatique lorsqu'elle constate que les première et deuxième conditions sont remplies, à savoir quand d'une part, l'élingue étant dirigée vers l'arrière de l'aéronef, l'angle θ séparant l'élingue 13 d'un axe vertical en élévation AX de l'aéronef dépasse une borne supérieure et, d'autre part, quand les première et deuxième valeurs V1, V2 atteignent un niveau prédéterminé.

L'unité de traitement envoie alors un ordre au crochet-déclencheur 12 pour qu'il relâche l'élingue 13.

On note que, dans l'hypothèse où la deuxième condition serait remplie alors que le largage ne serait pas activé, l'unité de traitement se contenterait d'envoyer une deuxième alarme, à l'unité de visualisation 40 par exemple.

Par ailleurs, le dispositif d'accrochage peut comporter un moyen de coupure 60, un bouton mis à la disposition du pilote, pour désactiver le largage automatique. Ainsi, un ordre de largage automatique provenant de l'unité de traitement ne sera pas transmis au crochet-délesteur 12.

Enfin, le dispositif d'accrochage 10 comporte de plus un moyen de commande manuel 50 du crochet-délesteur 12 afin que l'on puisse déposer la charge externe sur un site précis, un moyen de commande mécanique relié aux commandes de vol du pilote ou encore un moyen de commande électrique de secours éventuellement activable à distance.

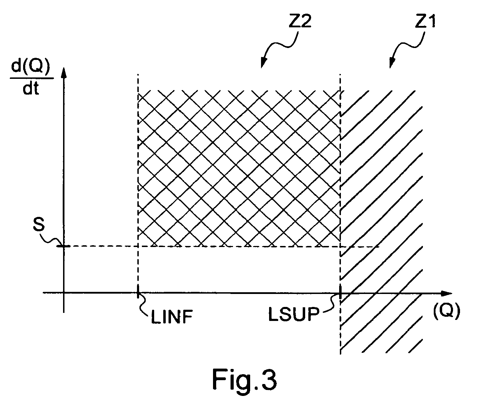

La figure 3 présente un diagramme comportant en ordonnée la dérivée par rapport au temps du quotient Q déterminé par l'unité de traitement, et en abscisse ce quotient Q.

Ce diagramme permet de montrer les zones hachurées Z1, Z2 schématisant le niveau prédéterminé à atteindre par les première et deuxième valeurs afin que l'unité de traitement déclenche le largage automatique de la charge externe.

En premier lieu, le niveau prédéterminé correspondant à la première zone hachurée Z1 est atteint quand la première valeur V1 dépasse une limite supérieure LSUP, quelle que soit la deuxième valeur V2.

En admettant que le terme évaluatif N soit égal au produit du facteur de charge n de la cellule selon l'axe de la pesanteur P par l'accélération g de la pesanteur, la limite supérieure vaut par exemple 1.2 fois la masse maximale autorisée de la charge externe, soit 2160 kilogrammes par exemple pour un certain type d'hélicoptère pouvant supporter une charge externe de 1800 Kilogrammes.

En second lieu, le niveau prédéterminé correspondant à la deuxième zone hachurée Z2 est atteint quand la première valeur V1 est comprise entre une limite inférieure LINF et une limite supérieure LSUP, alors que la deuxième valeur V2 dépasse un seuil S positif.

En admettant que le terme évaluatif N soit égal au produit du facteur de charge n de la cellule selon l'axe de la pesanteur P par l'accélération g de la pesanteur, les limites inférieure et supérieure valent par exemple respectivement 0.3 fois la masse maximale autorisée de la charge externe et 1.2 fois la masse maximale autorisée de la charge externe, soit respectivement 540 et 2160 kilogrammes par exemple pour un certain type d'hélicoptère pouvant supporter une charge externe d'une masse maximale de 1800 Kilogrammes.

Par ailleurs, le seuil S est avantageusement égal à la masse maximale autorisée de la charge externe divisée par 0.1 seconde.

Bien évidemment, il est possible de déterminer plus finement les valeurs du seuil et des limites inférieure et supérieure à l'aide d'essais en vol pour un aéronef donné.

Une méthode consiste à réaliser des vols avec des charges externes de masses différentes.

On détermine alors des points de mesure (Q,

$$\frac{dQ}{dt}$$

) à l'aide des enregistrements réalisés lors des vols d'essais, puis on place ces points de mesure dans un diagramme comportant en ordonnée la dérivée par rapport au temps du quotient Q, et en abscisse ce quotient Q.

A partir de ce stade, on hachure les zones non couvertes par des points de mesure pour délimiter les zones hachurées Z1, Z2 et par suite la limite inférieure, la limite supérieure et le seuil. Eventuellement, il est possible de prendre des marges de sécurité, de l'ordre de dix pourcents par exemple, pour garantir que l'on ne va pas larguer indûment une charge externe.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, defini par le texte des revendications.

Par exemple, le moyen de mesure peut à titre de variante mettre en oeuvre un capteur optique, ou tout autre type de capteur permettant de déterminer l'angle séparant l'élingue d'un axe vertical en élévation de l'aéronef.

## Revendications

**1.** Procédé de largage automatique d'une charge externe (4) suspendue de manière réversible à un crochet-délesteur (12) d'une cellule (2) d'aéronef par une élingue (13), au cours duquel :

- on mesure un angle (θ) séparant ladite élingue (13) d'un axe vertical en élévation (AX) de l'aéronef (1) parallèle à l'axe de lacet (Z) de l'aéronef (1) et passant par le point d'accrochage (100) d'un moyen de soutènement (11) du crochet-délesteur (12) à la cellule (2) de l'aéronef (1),
- on active le largage automatique lorsque d'une part ledit angle (θ) dépasse une borne supérieure (BSUP) et, d'autre part quand ladite élingue (13) est dirigée vers l'arrière (4') de l'aéronef afin d'éventuellement procéder au largage de ladite charge externe (4).

**2.** Procédé selon la revendication 1, **caractérisé en ce que**, lorsque ledit angle (θ) est compris entre une borne inférieure (BINF) et ladite borne supérieure (BSUP), on déclenche une première alarme.

**3.** Procédé selon l'une quelconque des revendications précédentes,

**caractérisé en ce qu'**on détermine la première valeur (V1) d'un quotient (Q) de la tension (T) exercée sur l'élingue (13) par un terme évaluatif (N) dépendant du facteur de charge (n) de ladite cellule (2) suivant l'axe de la pesanteur (P) et, la deuxième valeur (V2) de la dérivée $\left(\dfrac{dQ}{dt}\right)$ par rapport au temps dudit quotient (Q).

4. Procédé selon la revendication 3,
   **caractérisé en ce que** ledit terme évaluatif (N) est égale audit facteur de charge (n).

5. Procédé selon la revendication 3,
   **caractérisé en ce que** ledit terme évaluatif (N) est égal au produit dudit facteur de charge (n) par l'accélération de la pesanteur (g).

6. Procédé selon l'une quelconque des revendications 3 à 5,
   **caractérisé en ce qu'**on déclenche une deuxième alarme quand d'une part le largage automatique n'est pas activé du fait dudit angle (θ), et d'autre part, quand lesdites première et deuxième valeurs (V1, V2) atteignent un niveau prédéterminé.

7. Procédé selon l'une quelconque des revendications 3 à 6,
   **caractérisé en ce qu'**on déclenche le largage automatique en ordonnant au crochet-délesteur (12) de relâcher ladite élingue (13) quand d'une part le largage automatique est activé du fait dudit angle (θ), et d'autre part, quand lesdites première et deuxième valeurs (V1, V2) atteignent un niveau prédéterminé.

8. Procédé selon l'une quelconque des revendications 3 à 6,
   **caractérisé en ce qu'**on déclenche le largage automatique en ordonnant au crochet-délesteur (12) de relâcher ladite élingue (13) quand d'une part le largage automatique est activé du fait dudit angle (θ), et d'autre part, quand ladite première valeur (V1) dépasse une limite supérieure (LSUP), indépendamment de ladite deuxième valeur (V2).

9. Procédé selon l'une quelconque des revendications 3 à 6,
   **caractérisé en ce qu'**on déclenche le, largage automatique en ordonnant au crochet-délesteur (12) de relâcher ladite élingue (13) quand d'une part le largage automatique est activé du fait dudit angle (θ), et d'autre part, quand ladite première valeur (V1) est comprise entre une limite inférieure (LINF) et une limite supérieure (LSUP) alors que ladite deuxième valeur (V2) dépasse un seuil (S).

10. Aéronef (1) muni d'un dispositif d'accrochage (10) d'une charge externe (4) à une cellule (2) de l'aéronef (1), ledit dispositif d'accrochage (10) étant pourvu d'un crochet-délesteur (12) ainsi que d'un moyen de soutènement (11) et d'une élingue (13), ledit crochet-délesteur (12) étant fixé à un point d'accrochage (100) de la cellule (2) par le moyen de soutènement (11), ladite élingue (13) étant solidarisée de manière réversible audit crochet-délesteur (12),
    **caractérisé en ce qu'**il comporte un moyen de mesure (30) pour déterminer un angle (θ) séparant ladite élingue (13) d'un axe vertical en élévation (AX) de l'aéronef parallèle à l'axe de lacet (Z) de l'aéronef (1) et passant par un point d'accrochage (100) dudit moyen de soutènement (11) du crochet-délesteur (12) à la cellule (2) de l'aéronef, ainsi qu'une unité de traitement (20) reliée audit crochet-délesteur (12) et audit moyen de mesure (30), ladite unité de traitement (20) étant apte à recevoir un premier signal (S1) de la part du moyen de mesure (30) relatif audit angle et à la position de l'élingue afin de mettre en oeuvre le procédé de largage automatique selon l'une quelconque des revendications précédentes.

11. Aéronef selon la revendication 10,
    **caractérisé en ce que** ledit moyen de mesure (30) est pourvu d'un arceau (31) agencé sur ledit moyen de soutènement (11) et d'un capteur (32, 33) apte à être agencé sur ladite cellule (2).

12. Aéronef selon la revendication 11,
    **caractérisé en ce que** ledit capteur est pourvu d'une palette mobile (32) et d'un capteur angulaire (33) pour déterminer la position de ladite palette (32).

13. Aéronef selon l'une quelconque des revendications 10 à 12,
    **caractérisé en ce que** ledit dispositif d'accrochage comporte un peson (22) agencé sur ledit moyen de soutènement (11), ledit peson (22) étant relié à ladite unité de traitement (20) pour lui envoyer un deuxième signal (S2) relatif à la tension (T) de ladite élingue (13).

14. Aéronef selon l'une quelconque des revendications 10 à 13,
    **caractérisé en ce que** ledit dispositif d'accrochage (10) comporte un accéléromètre (21) relié à ladite unité de traitement (20) pour lui envoyer un troisième signal (S3) relatif aux accélérations subies par ladite cellule (2) afin que l'unité de traitement (20) puisse déterminer la première valeur (V1) d'un quotient (Q) de la tension (T) exercée sur l'élingue (13) par un terme évaluatif dépendant du facteur de charge (n) de ladite cellule (2) suivant l'axe de la pesanteur (P) et, la deuxième valeur (V2) de la dérivée $\left(\dfrac{dQ}{dt}\right)$

par rapport au temps dudit quotient (Q).

15. Aéronef selon l'une quelconque des revendications 10 à 14,
    **caractérisé en ce que** ledit dispositif d'accrochage (10) comporte une unité de visualisation (40) commandée par l'unité de traitement (20) pour afficher des alarmes et/ou des informations relatives à l'opération d'accrochage.

16. Aéronef selon l'une quelconque des revendications 10 à 15,
    **caractérisé en ce que** ledit dispositif d'accrochage (10) comporte un moyen de commande (50) manuel du crochet-délesteur (12).

**Claims**

1. A method for the automatic dropping of an external load (4) suspended in reversible manner from a release hook (12) of an aircraft fuselage (2) by a sling (13), during which:

   - an angle (θ) between said sling (13) and a vertical axis in elevation (AX) of the aircraft (1) parallel to the yaw axis (Z) of the aircraft (1) and passing through the point of attachment (100) of a support means (11) of the release hook (12) to the fuselage (2) of the aircraft (1) is measured,
   - the automatic dropping is activated when on one hand said angle (θ) exceeds an upper bound (BSUP) and on the other hand when said sling (13) is directed towards the rear (4') of the aircraft in order possibly to drop said external load (4).

2. A method according to Claim 1, **characterised in that**, when said angle (θ) lies between a lower bound (BINF) and said upper bound (BSUP), a first alarm is triggered.

3. A method according to any one of the preceding claims, **characterised in that** the first value (V1) is determined for a quotient (Q) of the tension (T) exerted on the sling (13) divided by an evaluative term (N) which depends on the load factor (n) of said fuselage (2) along the gravity axis (P), and the second value (V2) is determined for the derivative $\left(\dfrac{dQ}{dt}\right)_{\text{v}}$ with respect to time of said quotient (Q).

4. A method according to Claim 3, **characterised in that** said evaluative term (N) is equal to said load factor (n).

5. A method according to Claim 3, **characterised in**
that said evaluative term (N) is equal to the product of said load factor (n) and the acceleration due to gravity (g).

6. A method according to any one of Claims 3 to 5, **characterised in that** a second alarm is triggered when on one hand the automatic dropping is not activated as a result of said angle (θ), and on the other hand when said first and second values (V1,V2) reach predetermined levels.

7. A method according to any one of Claims 3 to 6, **characterised in that** the automatic dropping is triggered by commanding the release hook (12) to release said sling (13) when on one hand the automatic dropping is activated as a result of said angle (θ), and on the other hand when said first and second values (V1, V2) reach predetermined levels.

8. A method according to any one of Claims 3 to 6, **characterised in that** the automatic dropping is triggered by commanding the release hook (12) to release said sling (13) when on one hand the automatic dropping is activated as a result of said angle (θ), and on the other hand when said first value (V1) exceeds an upper limit (LSUP), independently of said second value (V2).

9. A method according to any one of Claims 3 to 6, **characterised in that** the automatic dropping is triggered by commanding the release hook (12) to release said sling (13) when on one hand the automatic dropping is activated as a result of said angle (θ), and on the other hand when said first value (V1) lies between a lower limit (LINF) and an upper limit (LSUP), while said second value (V2) exceeds a threshold (S).

10. An aircraft (1) provided with a device (10) for attaching an external load (4) to a fuselage (2) of the aircraft (1), said attachment device (10) being provided with a release hook (12) and also a support means (11) and a sling (13), said release hook (12) being fixed to a point of attachment (100) of the fuselage (2) by the support means (11), said sling (13) being secured reversibly to said release hook (12),
    **characterised in that** it comprises a measurement means (30) for determining an angle (θ) between said sling (13) and a vertical axis in elevation (AX) of the aircraft parallel to the yaw axis (Z) of the aircraft (1) and passing through a point of attachment (100) of said support means (11) of the release hook (12) to the fuselage (2) of the aircraft, and also a processing unit (20) connected to said release hook (12) and to said measurement means (30), said processing unit (20) being capable of receiving a first signal (S1) from the measurement means (30) relating to said angle and to the position of the sling in order to implement the automatic dropping method according to any one of the preceding claims.

11. An aircraft according to Claim 10, **characterised in that** said measurement means (30) is provided with an arch (31) arranged on said support means (11) and with a sensor (32, 33) capable of being arranged on said fuselage (2).

12. An aircraft according to Claim 11, **characterised in that** said sensor is provided with a mobile paddle (32) and an angle sensor (33) for determining the position of said paddle (32).

13. An aircraft according to any one of Claims 10 to 12, **characterised in that** said attachment device comprises a load cell (22) arranged on said support means (11), said load cell (22) being connected to said processing unit (20) in order to send it a second signal (S2) relating to the tension (T) of said sling (13).

14. An aircraft according to any one of Claims 10 to 13, **characterised in that** said attachment device (10) comprises an accelerometer (21) connected to said processing unit (20) in order to send it a third signal (S3) relating to the accelerations to which said fuselage (2) is subjected so that the processing unit (20) can determine the first value (V1) of a quotient (Q) of the tension (T) exerted on the sling (13) divided by an evaluative term which depends on the load factor (n) of said fuselage (2) along the gravity axis (P), and the second value (V2) of the derivative $\left(\frac{dQ}{dt}\right)$ with respect to time of said quotient (Q).

15. An aircraft according to any one of Claims 10 to 14, **characterised in that** said attachment device (10) comprises a display unit (40) controlled by the processing unit (20) for displaying alarms and/or information relating to the attachment operation.

16. An aircraft according to any one of Claims 10 to 15, **characterised in that** said attachment device (10) comprises a manual control means (50) for the release hook (12).

**Patentansprüche**

1. Verfahren zum automatischen Abwerfen einer an einem Abwurfhaken (12) einer Kabine (2) eines Luftfahrzeugs mit einem Hebegurt (13) reversibel angehängten externen Last (4), währenddessen:

   - ein Winkel (θ) gemessen wird, der sich zwischen dem Hebegurt (13) und einer Vertikalachse (AX) des Luftfahrzeugs (1), die parallel zur Z-Achse (Z) des Luftfahrzeugs (1) verläuft, und die durch den Aufhängepunkt (100) eines Haltemittels (11) des Abwurfhakens (12) der Kabine (2) des Luftfahrzeugs (1) durchgeht, erstreckt, und

   - der automatische Abwurf ausgelöst wird während einerseits der besagte Winkel (θ) eine obere Grenze (BSUP) überschreitet und andererseits wenn der Hebegurt (13) sich zum hinteren Teil (4') des Luftfahrzeugs erstreckt, um gegebenenfalls den Abwurf der besagten externen Last (4) in Gang zu setzen.

2. Verfahren nach Anspruch 1, **dadurch gekennzeichnet, dass** wenn der Winkel (θ) zwischen einem unteren Grenzwert (BINF) und dem besagten oberen Grenzwert (BSUP) liegt ein erster Alarm ausgelöst wird.

3. Verfahren nach einem der vorstehenden Ansprüche, **dadurch gekennzeichnet, dass** ein erster Wert (V1) eines Quotienten (Q) aus der auf den Hebegurt (13) ausgeübten Spannung (T) und einem evaluativen Term (N), der von dem Ladefaktor (n) der Kabine (2) entlang der Schwerkraftachse (P) abhängt, und ein zweiter Wert (V2), der die Ableitung $(\frac{dQ}{dt})$ über der Zeit des Terms des besagten Quotienten (Q) beschreibt, bestimmt wird.

4. Verfahren nach Anspruch 3, **dadurch gekennzeichnet, dass** der evaluative Term (N) gleich dem Ladefaktor (n) ist.

5. Verfahren nach Anspruch 3, **dadurch gekennzeichnet, dass** der evaluative Term (N) gleich dem Produkt des Ladefaktors (n) mit der Erdbeschleunigung (g) ist.

6. Verfahren nach einem der Ansprüche 3 bis 5, **dadurch gekennzeichnet, dass** ein zweiter Alarm ausgelöst wird, wenn einerseits der automatische Abwurf aufgrund des Winkels (θ) nicht ausgelöst wurde, und andererseits, wenn die ersten und zweiten Werte (V1, V2) eine vorbestimmte Größe einnehmen.

7. Verfahren nach einem der Ansprüche 3 bis 6, **dadurch gekennzeichnet, dass** der automatische Abwurf ausgelöst wird, indem dem Abwurfhaken (12) der Befehl gegeben wird den Hebegurt (13) loszulassen, wenn einerseits der automatische Abwurf ausgelöst wird, wegen des besagten Winkels (θ), und andererseits wenn die ersten und zweiten Werte (V1, V2) eine vorbestimmte Größe annehmen.

**8.** Verfahren nach einem der Ansprüche 3 bis 6, **dadurch gekennzeichnet, dass** der automatische Abwurf ausgelöst wird, indem dem Abwurfhaken (12) der Befehl gegeben wird den Hebegurt (13) loszulassen, wenn einerseits der automatische Abwurf aktiviert ist, aufgrund des Winkels (θ), und andererseits wenn der besagte erste Wert (V1) eine obere Grenze (LSUP) überschreitet, unabhängig von dem zweiten Wert (V2).

**9.** Verfahren nach einem der Ansprüche 3 bis 6, **dadurch gekennzeichnet, dass** der automatische Abwurf ausgelöst wird, indem dem Abwurfhaken (12) der Befehl gegeben wird den Hebegurt (13) loszulassen, wenn einerseits der automatische Abwurf wegen dem Winkel (θ) ausgelöst ist, und andererseits, wenn der erste Wert (V1) zwischen einer unteren Grenze (LINF) und einer oberen Grenze (LSUP) liegt, während der zweite Wert (V2) einen Stellenwert (S) überschreitet.

**10.** Luftfahrzeug (1) mit einer Vorrichtung zum Einhaken (10) einer äußeren Last (4) an einer Kabine (2) des Luftfahrzeugs (1), wobei die Einhakvorrichtung (10) mit einem Abwurfhaken (12) sowie einem Haltemittel (11) versehen ist und mit einem Hebegurt (13), wobei der Abwurfhaken (12) an einem Halterungspunkt (100) der Kabine (2) über die Haltemittel (11) befestigt ist und der Hebegurt (13) reversibel an dem Abwurfhaken (12) befestigt ist, **dadurch gekennzeichnet, dass** es ein Messinstrument (30) aufweist, um einen Winkel (θ) zu ermitteln, der sich zwischen dem Hebegurt (13) und einer vertikalen Achse des Luftfahrzeugs erstreckt, die parallel zur Z-Achse (Z) des Luftfahrzeugs (1) verläuft und durch den Befestigungpunkt (100) des Haltemittels (11) des Abwurfhakens (12) an der Kabine (2) des Luftfahrzeugs durchgeht, erstreckt, und das Luftfahrzeug ferner eine Verarbeitungseinheit (20) aufweist, die mit dem Abwurfhaken (12) und dem besagten Messinstrument (30) verbunden ist, wobei die Verarbeitungseinheit (20) ein erstes Signal (S1) von dem Messinstrument (30) aufnehmen kann, welches den Winkel und die Lage des Hebegurtes wiedergibt, um das automatische Abwerfen gemäß einem der vorstehenden Ansprüche auszulösen.

**11.** Luftfahrzeug nach Anspruch 10, **dadurch gekennzeichnet, dass** das Messinstrument (30) mit einem Bügel (31) versehen ist, der an dem Haltemittel (11) angebracht ist und mit einem Detektor (32, 33), der an der Kabine (2) anbringbar ist.

**12.** Luftfahrzeug nach Anspruch 11, **dadurch gekennzeichnet, dass** der Detektor mit einem beweglichen Flügel (32) und einem Winkelmesser (33) versehen ist, der die Lage des Flügels (32) erfasst

**13.** Luftfahrzeug nach einem der Ansprüche 10 bis 12, **dadurch gekennzeichnet, dass** das Befestigungsmittel einer Zugwaage (22) aufweist, die an dem Haltemittel (11) angebracht ist, wobei die Zugwaage (22) mit der Verarbeitungseinheit (20) verbunden ist, um dieser ein zweites Signal (S2) bezüglich der Spannung (T) des Hebegurts (13) zu senden.

**14.** Luftfahrzeug nach einem der Ansprüche 10 bis 13, **dadurch gekennzeichnet, dass** das Befestigungsmittel (10) einen Beschleunigungsmesser (2) aufweist, der mit der Verarbeitungseinheit (20) verbunden ist, um diesem ein drittes Signal (S3) zu senden bezüglich der Beschleunigung, die von der Kabine (2) erfahren wird, damit die Verarbeitungseinheit (20) den ersten Wert (V1) eines Quotienten (Q) der Spannung (T), die an dem Hebegurt (13) anliegt, durch einen evaluativen Term zu bestimmen, der von dem Lastfaktor (n) der Kabine (2) entlang der Schwerkraftachse (P) zu bestimmen sowie den zweiten Faktor (V2) der Ableitung ($\frac{dQ}{dt}$) über der Zeit des Quotienten (Q).

**15.** Luftfahrzeug nach einem der Ansprüche 10 bis 14, **dadurch gekennzeichnet, dass** die Befestigungsvorrichtung (10) eine Visualisierungseinheit (40) aufweist, die von der Verarbeitungseinheit (20) gesteuert wird, um die Alarmsignale und/oder Informationen bezüglich der Einhakoperation darzustellen.

**16.** Luftfahrzeug nach einem der Ansprüche 10 bis 15, **dadurch gekennzeichnet, dass** das Befestigungsmittel (10) ein manuelles Steuermittel (50) für den Abwurfhaken (12) aufweist.

Fig.1

Fig.2

Fig.3

## RÉFÉRENCES CITÉES DANS LA DESCRIPTION

### Documents brevets cités dans la description

- GB 2437407 A
- EP 0259250 A
- FR 2149777
- FR 2575550
- JP 19960101019 B
- GB 1074465 A
- US 3904156 A
- FR 2197766